# EUROPÄISCHE PATENTSCHRIFT

(11) **EP 3 308 984 B1**
(45) Veröffentlichungstag und Bekanntmachung des Hinweises auf die Patenterteilung: **22.05.2019**
(21) Anmeldenummer: 17181572.3
(22) Anmeldetag: 17.07.2017
(51) Int. Cl.: B60C 19/00, B60C 1/00, B60C 19/12

(54) **FAHRZEUGLUFTREIFEN UND VERWENDUNG EINES POLYBUTENS MIT EINEM GERINGEN CHLORGEHALT**
PNEUMATIC VEHICLE TYRES AND USE OF A POLYBUTENE WITH A LOW CHLORINE CONTENT
PNEUMATIQUES POUR VÉHICULE ET UTILISATION D'UN POLYBUTÈNE À BASSE TENEUR EN CHLORE

(30) Priorität: 11.10.2016 DE 102016219666
(43) Veröffentlichungstag der Anmeldung: 18.04.2018
(73) Patentinhaber: Continental Reifen Deutschland GmbH, 30165 Hannover (DE)
(72) Erfinder: Dahlke, Markus, 31515 Wunstorf (DE); Guardalabene, Joe, 30659 Hannover (DE); Schleer, Nadja, 30451 Hannover (DE)
(74) Vertreter: Finger, Karsten

(56) Entgegenhaltungen:
- WO-A1-2013/053808
- DE-A1-102007 028 932
- DE-A1-102013 110 977
- DE-A1-102014 206 009

## Beschreibung

Die Erfindung betrifft einen Fahrzeugluftreifen mit einem in seinem Inneren an der dem Laufstreifen gegenüberliegenden Innenfläche haftend angebrachten Geräuschabsorber, wobei der Geräuschabsorber an einem vorab aufgebrachten, selbsttätig abdichtenden Dichtmittel haftet, welches zumindest unmittelbar nach seinem Aufbringen eine zum Anhaften des Geräuschabsorbers erforderliche Klebrigkeit aufweist.

Ein eingangs genannter Fahrzeugluftreifen ist aus der DE 10 2007 028932 A1 und der WO 2015149959 A1 bekannt. Der Geräuschabsorber aus der DE 10 2007 028932 A1 ist in Form eines Schaumstoffrings ausgeführt und reduziert die Luftschwingung im Reifen und führt zu einer Verbesserung des Geräuschverhaltens im Fahrzeug. Der Schaumstoffring besteht aus offenzelligem Schaumstoff und wird auch als "Innenabsorber" bezeichnet. Das an der Reifeninnenseite nach dem Heizvorgang des Reifens nachträglich aufgebrachte Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.
Das Dichtmittel kann auf Basis von Polyurethan oder einer viskosen Mischung auf Basis eines Butylkautschukes, eines Polybutens oder auf Basis von Silikon ausgeführt sein. Die Verwendung eines Polybutens in einem selbsttätig abdichtenden Dichtmittel in einem Fahrzeugluftreifen ist aus der DE 10 2013 110977 A1 und WO 2013/053808 A1 bekannt.

Allerdings können die im Stand der Technik bekannten Kombinationen aus Dichtmittel und Schaumstoff dazu führen, dass Substanzen aus dem Dichtmittel den Schaumstoff angreifen und zersetzen. In der Folge kann die geräuschabsorbierende Wirkung des Schaumstoffs reduziert bzw. stark beeinträchtigt sein oder der Schaumstoff kann sich vom Dichtmittel ablösen.

Der vorliegenden Erfindung liegt daher die Aufgabe zugrunde, einen Fahrzeugluftreifen der eingangs genannten Art bereitzustellen, bei dem der Geräuschabsorber eine höhere Langlebigkeit aufweist und nicht zersetzt wird. Die geräuschabsorbierenden Eigenschaften des Fahrzeugluftreifens sollen somit über einen langen Zeitraum, bis zum Ende des Reifenlebens, sichergestellt sein. Gleichzeitig sollen die selbstabdichtenden Eigenschaften zumindest nicht signifikant beeinträchtigt werden bzw. gleich bleiben.

Gelöst wird diese Aufgabe dadurch, dass das Dichtmittel des erfindungsgemäßen Fahrzeugluftreifens wenigstens ein Polyolefin mit einem Chlorgehalt von kleiner oder gleich 5 mg/kg enthält.

Es hat sich überraschenderweise herausgestellt, dass der Geräuschabsorber des erfindungsgemäßen Fahrzeugluftreifens durch die gezielte Auswahl eines Polyolefins mit einem geringen Chlorgehalt im Dichtmittel nicht angegriffen wird und sich daher nicht zersetzt. Hierdurch wird eine hohe Kompatibilität zwischen Dichtmittel und Geräuschabsorber erzielt. Die geräuschabsorbierenden Eigenschaften des Fahrzeugluftreifens bleiben somit über einen längeren Zeitraum, bis zum Ende des Reifenlebens, erhalten und der Schaumstoff bleibt fest am Dichtmittel angeklebt. Dadurch werden ungewollte Vibrationen wegen Umwucht vermieden.
Im Stand der Technik bekannte Polyolefine, wie beispielsweise und insbesondere Polybuten, weisen einen vergleichsweise hohen Chlorgehalt auf. Dieser kann, insbesondere durch Bildung von Salzsäure (HCl) den Geräuschabsorber, insbesondere den Schaumstoff, angreifen.

Gleichzeitig werden die selbstabdichtenden Eigenschaften mit dem Dichtmittel nicht negativ beeinträchtigt.

Bei dem Geräuschabsorber des erfindungsgemäßen Fahrzeugluftreifens kann es sich prinzipiell um jedes Element handeln, welches in einem Fahrzeugluftreifen auf seiner Innenfläche durch Haftung angebracht werden kann und welches die Geräuschemission des Reifens im Fahrbetrieb reduziert.
Gemäß einer bevorzugten Ausführungsform ist der Geräuschabsorber ein poröses Dämpfungselement. Poröse Materialien weisen insbesondere den Vorteil auf, dass sie neben der Geräuschabsorption zugleich ein nicht zu hohes Eigengewicht in den Reifen einbringen, sodass die Rollwiderstandseigenschaften des Reifens nicht unnötig verschlechtert werden.
Das poröse Material, aus dem das Dämpfungselement ausgebildet ist, ist beispielsweise ausgewählt aus der Gruppe enthaltend Polyurethan, insbesondere Polyurethanschäume auf einer Polyetherbasis und/oder Polyurethanschäume auf einer Polyesterbasis mit einer Dichte von 18 bis 300 kg/m³, bevorzugt 30 bis 35 kg/m³, und einer Härte von 6,5 kilo-pascal, Polyester mit einer Dichte von 18 bis 300 kg/m³ bevorzugt 30 bis 35 kg/m³, und einer Härte von 6,5 kilo-pascal, Polyether, sowie beliebige poröse, schallabsorbierende Materialienmischungen, wie beispielsweise Glas- oder Steinwolle, Schlingenware oder Hochflor oder Vliesmaterialien oder Kork. Weitere mögliche poröse Materialien, die sich für die Nutzung als Dämpfungselement eignen, sind beispielsweise ein Melaminharzschaum oder ein Bauschaum.

Besonders bevorzugt enthält der Geräuschabsorber, bevorzugt ein poröses Dämpfungselement, wenigstens ein Polyurethan. Polyurethan ist aufgrund seiner spezifischen Dichte und sonstigen Materialbeschaffenheit sowie Verfügbarkeit besonders geeignet.
Insbesondere ein Geräuschabsorber aus Polyurethan wird jedoch von chlorhaltigen Substanzen, wie insbesondere frei werdender Salzsäure wie oben beschrieben, angegriffen und zersetzt.

Im erfindungsgemäßen Fahrzeugluftreifen ist es somit möglich Polyurethan oder vergleichbare Substanzen zur Schallabsorption in einem Geräuschabsorber einzusetzen ohne dass diese Wirkung im Laufe des Reifenlebens nachlässt.
Gemäß einer besonders vorteilhaften Ausführungsform ist das poröse Dämpfungselement ein in Umlaufrichtung geschlossener oder geöffneter schallabsorbierender Schaumstoffring. Dieser sorgt für eine gleichmäßige Schallabsorption und der Reifen behält seine Gleichförmigkeit. Der Ring kann dabei in Umlaufrichtung geschlossen sein oder in geöffneter Form als Streifen vorliegen, wobei sich die Enden des Streifens berühren können aber nicht müssen oder aber auch überlappen können.
Der Schaumstoff des Schaumstoffringes ist bevorzugt ein offenzelliger Schaumstoff, da dieser am besten dazu geeignet ist, Schall zu absorbieren.

Besonderes bevorzugt ist der Geräuschabsorber ein geschlossener schallabsorbierender Schaumstoffring aus Polyurethan, dabei besonders bevorzugt ein Polyurethanschaum auf Polyetherbasis.
Derartige Schäume sind dem Fachmann bekannt.

Selbsttätig abdichtende Reifendichtmittel sind dem Fachmann ebenfalls bekannt. Wie eingangs ausgeführt, können diese auf Butylkautschuk und Polybuten basieren. Eine genauere Spezifikation des Polybutens hinsichtlich der Verunreinigungen und Nebenbestandteile, insbesondere hinsichtlich des Chlorgehaltes, ist dem Stand der Technik im Zusammenhang mit Reifendichtmitteln nicht zu entnehmen.

Gemäß vorliegender Erfindung enthält das selbsttätig abdichtende Reifendichtmittel wenigstens ein Polyolefin mit einem Chlorgehalt von kleiner oder gleich 5 mg/kg, bevorzugt kleiner oder gleich 3 mg/kg. Die Angabe bezieht sich auf mg Chlor pro einem kg des Polyolefins. In einer bevorzugten Ausführungsform der Erfindung enthält das selbsttätig abdichtende Reifendichtmittel wenigstens ein Polyolefin mit einem Chlorgehalt von kleiner oder gleich 1,5 mg/kg, besonders bevorzugt kleiner als 1 mg/kg.

Das wenigstens eine Polyolefin des Reifendichtmittels weist bevorzugt ein Zahlenmittel der Molekulargewichtsverteilung Mn gemäß GPC von 800 bis 2500 g/mol, besonders bevorzugt 1200 bis 1600 g/mol, ganz besonders bevorzugt 1200 bis 1400 g/mol, beispielsweise 1300 g/mol, auf.
Ein Polyolefin mit einem Mn von 800 bis 2500 g/mol ist besonders geeignet, um die gewünschte Fließfähigkeit bei gleichzeitiger Abdichtwirkung des Dichtmittels im Pannenfall zu erzeugen.
Hierbei ist es besonders bevorzugt, dass das Polyolefin wenigstens ein Polybuten ist. Dieses stellt die Klebrigkeit des fertigen Dichtmittels ein und bestimmt die Fließfähigkeit im Produktionsprozess sowie die lokale Ortsfestigkeit des fertigen Dichtmittels.
Es kann sich auch um ein Gemisch zweier oder mehrerer Polybutene handeln.
Es ist auch ein Gemisch wenigstens eines Polybutens mit wenigstens einem weiteren Polyolefin denkbar.

Gemäß einer besonders bevorzugten Ausführungsform der Erfindung enthält das Dichtmittel somit wenigstens ein Polybuten mit einem Chlorgehalt von kleiner oder gleich 5 mg/kg. Geeignete Polybutene, auch Polyisobutene genannt, sind beispielsweise unter den Handelsnamen Glissopal® der Firma BASF bekannt. Insbesondere geeignet sind hierbei Glissopal® V-500, V-640 oder V-190.

Das Dichtmittel des erfindungsgemäßen Fahrzeugluftreifens enthält besonders bevorzugt 65 bis 75 Gew.-% wenigstes eines Polybutens mit einem Chlorgehalt von kleiner oder gleich 5 mg/kg.

Bevorzugt enthält das Dichtmittel zudem:
- Wenigstens einen Kautschuk und
- Wenigstens einen Füllstoff und
- Wenigstens einen Klebrigmacher und
- Wenigstens einen Vernetzer und
- Wenigstens einen Vernetzungsinitiator.

Gemäß einer vorteilhaften Ausführungsform der Erfindung enthält das Dichtmittel die Bestandteile in folgenden Mengen:
- 65 bis 75 Gew.-% wenigstes eines Polybutens mit einem Chlorgehalt von kleiner oder gleich 5 mg/kg und
- 9 bis 14,9 Gew.-% wenigstens eines Kautschuks und
- 5 bis 8,9 Gew.-% wenigstens eines Füllstoffs und
- 2 bis 3,5 Gew.-% wenigstens eines Klebrigmachers und
- 0,4 bis 0,8 Gew.-% wenigstens eines Vernetzers und
- 0,5 bis 1,2 Gew.-% wenigstens eines Vernetzungsinitiators.

Die Angaben in Gew.-% beziehen sich jeweils auf die Gesamtmenge an Dichtmittel.

Bevorzugt basiert das Dichtmittel somit auf der Vernetzung eines Kautschuks mit einem Vernetzer.
Dem Fachmann ist klar, dass die genannten Bestandteile im vernetzten Dichtmittel zumindest teilweise in chemisch veränderter Form, insbesondere als Derivate, vorliegen.

Bei dem Kautschuk kann es sich um alle dem Fachmann bekannten Kautschuktypen handeln. Es ist auch ein Gemisch verschiedener Kautschuke denkbar.
Gemäß einer bevorzugten Ausführungsform der Erfindung handelt es sich bei dem Kautschuk in Verfahrensschritt a) um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Bei dem Füllstoff kann es sich um alle dem Fachmann bekannten Füllstoffe handeln, wie insbesondere Ruß und/oder Kieselsäure.
Gemäß einer bevorzugten Ausführungsform der Erfindung umfasst der Füllstoff in wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.
Hierbei kann es sich um alle dem Fachmann bekannten Rußtypen handeln, wie insbesondere und bevorzugt ein Ruß des Typs N326.

Unter Klebrigmacher wird eine Substanz verstanden, die die Klebrigkeit des Dichtmittels erhöht. Bevorzugt ist der Klebrigmacher wenigstens ein Klebharz, welches ausgewählt ist aus der Gruppe bestehend aus Alkylharzen und Phenolharzen und Gum Resin ("Gummiharz"), insbesondere Tetrahydroabeitinsäure und/oder Kolophonium und/oder Balsamharz, und Koresin und aromatische Harze und Terpen -Oligomere und Coumarone-Inden-Harze.

Insbesondere durch die Kombination eines Vernetzers mit einem Vernetzungsinitiator wird ein besonders wirksames, im Pannenfall schnell abdichtendes Reifendichtmittel erhalten.

Gemäß einer bevorzugten Ausführungsform der Erfindung ist der Vernetzer ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.
Mit den bevorzugten und besonders bevorzugten Vernetzern wird eine extrem schnelle Vernetzung bei relativ niedrigen Temperaturen erzielt. Dies ermöglicht bei der Herstellung des Dichtmittels eine Anwendung von Rezepten mit niedrigen Viskositäten die schnell nach dem Aufbringen des Materials in den Reifen ortsfest sind.
Der Vernetzungsinitiator ist eine chemische Verbindung, welche die Vernetzung des Dichtmittels initiiert. Bei dem Vernetzungsinitiator kann es sich beispielsweise und bevorzugt um Bleioxid oder andere Metalloxide oder eine peroxidische Verbindung handeln.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Das Dichtmittel kann ferner weitere Bestandteile enthalten, wie insbesondere Weichmacher, wie z. B. Öl(e), sowie gegebenenfalls weitere Zusatzstoffe, wie z. B. Farbpigmente und/oder Zinkoxid und/oder Schwefel und/oder Mikrosphären und/oder Glaskugeln und/oder Plastikpartikel.

Bei dem Öl kann es sich um alle dem Fachmann bekannten Öle handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Das Dichtmittel enthält bevorzugt keine Substanz, die einen Chlorgehalt von größer als 5 mg/kg bezogen auf die jeweilige Substanz aufweist, d.h. es ist bevorzugt frei von derartigen Substanzen, insbesondere bevorzugt frei von Polybuten mit einem Chlorgehalt von größer als 5 mg/kg bezogen auf das jeweilige Polybuten.
Damit ist der Chlorgehalt bezogen auf die Gesamtmenge an Dichtmittel bevorzugt durch das oder die eingesetzten oben beschriebene(n) Polybuten(e) eingestellt.
Ein weiterer Gegenstand der vorliegenden Erfindung ist die Verwendung eines Polybutens mit einem Chlorgehalt von kleiner oder gleich 5 mg/kg in einem Haftmittel zur Befestigung eines Geräuschabsorbers aus Polyurethan auf der dem Laufstreifen gegenüberliegenden Innenfläche eines Fahrzeugluftreifens.

Durch die erfindungsgemäße Verwendung ist es möglich, ein Polyurethan, bevorzugt in Form eines schallabsorbierendes Schaumstoffringes, oder einen Geräuschabsorber aus anderen Schaumstoffmaterialien zur Geräuschabsorption in einem Fahrzeugluftreifen einzusetzen, ohne dass dieser zersetzt wird.
Das Haftmittel kann jede beliebige Zusammensetzung aufweisen, solange wenigstens ein Polybuten mit einem Chlorgehalt von kleiner oder gleich 5 mg/kg, bevorzugt in Mengen von 65 bis 75 Gew.-%, enthalten ist. Bevorzugt ist das Haftmittel bei der erfindungsgemäßen Verwendung des Polybutens eine Dichtmittelzusammensetzung und besonders bevorzugt die oben beschriebene Dichtmittelzusammensetzung inklusive aller Ausführungsformen.

Im Folgenden soll die Erfindung anhand eines Beispiels erläutert werden.

Herstellung des Dichtmittels:
Beispielsweise wird zunächst eine Komponente A aus einem Masterbatch und Polybuten hergestellt:
   Hierbei wird zunächst in einem Innenmischer ein Masterbatch hergestellt, der 45 bis 50 Gew.% Butylkautschuk, 25 bis 30 Gew.-% Ruß N326, 2 bis 5 Gew.-% MES-Öl, 2 bis 3 Gew.-% Zinkoxid, 8 bis 10 Gew.-% Klebharz, 2 bis 4 Gew.-% Chinondioxim sowie 0,5 bis 3 Gew.-% Schwefel enthält.
Die Gew.-% beziehen sich jeweils auf den Anteil bezogen auf die Gesamtmenge des Masterbatches.

In einem Doppelschneckenextruder werden 25 bis 30 Gew.-% des Masterbatches dann gemäß einem Verfahrensschritt b) kontinuierlich mit 65 bis 70 Gew.-% Polybuten (z. B. Glissopal® V-500) und 1 bis 5 Gew.-% Paraffinöl vermischt, wodurch die Komponente A hergestellt ist. Die Gew.-% beziehen sich jeweils auf den Anteil bezogen auf die Gesamtmenge der Komponente A.

Es wird gemäß einem Schritt c) die Komponente B enthaltend 70 bis 75 Gew.-% Polybuten (z. B. Glissopal® V-500) und 25 bis 30 Gew.-% Dibenzoylperoxid-Lösung (50 Gew.-% Dibenzoylperoxid in Dibutylmaleat) bereitgestellt, wobei sich die Gew.-% auf die Gesamtmenge der Komponente B beziehen.

Gemäß einem Schritt d) werden beispielsweise Komponente A und Komponente B im Gewichtsverhältnis 10 zu 1 miteinander vermischt, wodurch das Dichtmittel erhalten wird.

Die Vernetzung erfolgt bei und nach dem Vermischen von Komponente A und Komponente B.

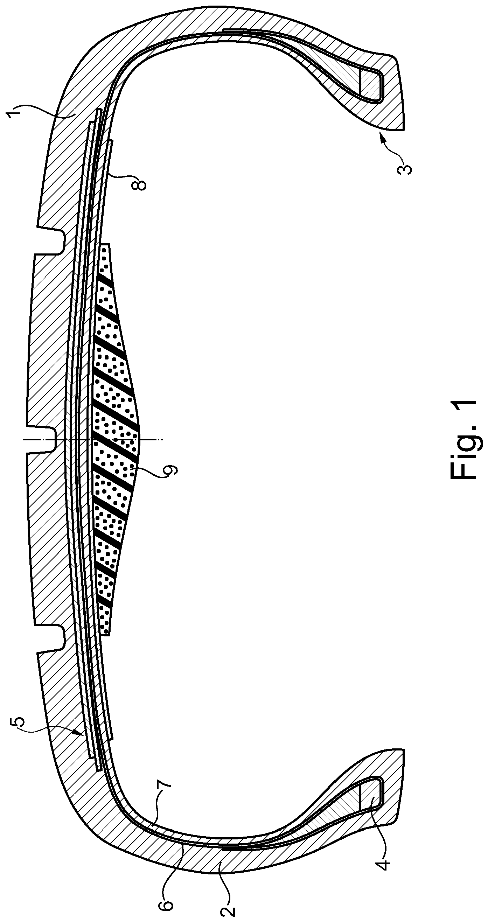

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist nachträglich (beim fertigen Reifen) ein Dichtmittel 8 aufgebracht, welches in der Lage ist, sich bei Durchstich - Beschädigung des Reifens - selbstabdichtend zu verhalten. Am Dichtmittel 8 haftet ein schallabsorbierender Schaumstoffring als Geräuschabsorber 9, welcher unmittelbar nach dem Aufbringen des Dichtmittels 8, solange dieses noch ausreichend klebrig ist, auf das Dichtmittel 8 aufgepresst wird, wie nachfolgend beschrieben wird. Der schallabsorbierende Schaumstoffring ist bezüglich seiner schallabsorbierenden Eigenschaften auf die Reifenhohlraumfrequenz abgestimmt. Der Geräuschabsorber 9 in Form eines Schaumstoffrings weist beispielsweise hier einen etwa langgestreckt dreieckförmigen, bezüglich des Reifenäquators symmetrischen Querschnitt auf.
Der Schaumstoff des Schaumstoffringes ist ein offenzelliger Schaumstoff, da dieser am besten dazu geeignet ist, Schall zu absorbieren.
Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 2 mm und 8 mm beträgt. Zumindest unmittelbar nach dem Aufbringen soll das Dichtmittel relativ flüssigsein, um eine optimale Verteilung des Dichtmittels über die Oberfläche zu erreichen und zudem klebrig sein. Zu diesem Zeitpunkt wird der vorgefertigte Schaumstoffring in das Innere des Reifens eingebracht und angedrückt. Nach dem Einbringen haftet der Schaumstoffring an dem elastisch deformierbaren, aber weitestgehend ortsfest verbleibenden Dichtmittel 8.

Bei den folgenden Beispielen wurde die Kompatibilität von unterschiedlichen Polybutenen mit einem Polyurethanschaum getestet:
In dem erfindungsgemäßen Beispiel E1 wurde eine Zusammensetzung enthaltend Glissopal® V-500 als Polybuten mit einem Chlorgehalt < 1 mg/kg verwendet.
Im Vergleichsbeispiel V1 wurde Indopol H-300 der Firma Ineos mit einem Chlorgehalt von 60 mg/kg verwendet.
Jeweils 3g der Zusammensetzungen E1 und V1 wurden jeweils in Kontakt mit einem Polyurethanschaum auf Polyetherbasis gebracht. Die Schaumstücke hatten vor dem Versuch die Maße 34x12x12 mm.

Die Proben wurden abgedeckt in einem Glasgefäß getrennt voneinander in einem Trockenofen für 5 Tage bei 105 °C gehalten.

Nach fünf Tagen hatte sich der Schaum, der in Kontakt mit dem Vergleichsbeispiel V1 war, hellbraun verfärbt und war an der Kontaktfläche zur Dichtmittelzusammensetzung V1 brüchig, wobei der Schaum im erfindungsgemäßen Beispiel E1 sich nicht verfärbt hatte und hinsichtlich der Brüchigkeit unversehrt war.

In dem erfindungsgemäßen Beispiel E2 wurde eine Zusammensetzung enthaltend Glissopal® V-500 als Polybuten mit einem Chlorgehalt < 1 mg/kg und 0,8 Gew.-% para-Benzochinondioxim verwendet.
Im Vergleichsbeispiel V2 wurde Indopol H-300 der Firma Ineos mit einem Chlorgehalt von 60 mg/kg und 0,8 Gew.-% para-Benzochinondioxim verwendet. Jeweils 3g der Zusammensetzungen E2 und V2 wurden jeweils in Kontakt mit einem Polyurethanschaum auf Polyetherbasis gebracht. Die Schaumstücke hatten vor dem Versuch die Maße 34x12x12 mm.

Die Proben wurden abgedeckt in einem Glasgefäß getrennt voneinander in einem Trockenofen für 5 Tage bei 105 °C gehalten.

Nach fünf Tagen hatte sich der Schaum, der in Kontakt mit dem Vergleichsbeispiel V2 war, stark dunkelbraun verfärbt und war an der Kontaktfläche zur Dichtmittelzusammensetzung V2 brüchig, wobei der Schaum im erfindungsgemäßen Beispiel E2 sich nur im Kontaktbereich etwas dunkelbraun verfärbt hatte und hinsichtlich der Brüchigkeit unversehrt war.

In dem erfindungsgemäßen Beispiel E3 wurde eine Zusammensetzung enthaltend Glissopal® V-500 als Polybuten mit einem Chlorgehalt < 1 mg/kg und 2,3 Gew.-% Dibenzoylperoxid verwendet.
Im Vergleichsbeispiel V3 wurde Indopol H-300 der Firma Ineos mit einem Chlorgehalt von 60 mg/kg und 2,3 Gew.-% Dibenzoylperoxid verwendet.

Jeweils 3g der Zusammensetzungen E3 und V3 wurden jeweils in Kontakt mit einem Polyurethanschaum auf Polyetherbasis gebracht. Die Schaumstücke hatten vor dem Versuch die Maße 34x12x12 mm.

Die Proben wurden abgedeckt in einem Glasgefäß getrennt voneinander in einem Trockenofen für 5 Tage bei 105 °C gehalten.

Nach fünf Tagen hatte sich der Schaum, der in Kontakt mit dem Vergleichsbeispiel V3 war, stark gelbbraun verfärbt und war an der Kontaktfläche zur Dichtmittelzusammensetzung V3 stark brüchig, wobei der Schaum im erfindungsgemäßen Beispiel E3 sich nur im Kontaktbereich etwas braun verfärbt hatte und hinsichtlich der Brüchigkeit unversehrt war.

In dem erfindungsgemäßen Beispiel E4 wurde eine Zusammensetzung enthaltend Glissopal® V-500 als Polybuten mit einem Chlorgehalt < 1 mg/kg und 0,8 Gew.-% para-Benzochinondioxim und 2,3 Gew.-% Dibenzoylperoxid verwendet.
Im Vergleichsbeispiel V4 wurde Indopol H-300 der Firma Ineos mit einem Chlorgehalt von 60 mg/kg und 0,8 Gew.-% para-Benzochinondioxim und 2,3 Gew.-% Dibenzoylperoxid verwendet.
Jeweils 3g der Zusammensetzungen E4 und V4 wurden jeweils in Kontakt mit einem Polyurethanschaum auf Polyetherbasis gebracht. Die Schaumstücke hatten vor dem Versuch die Maße 34x12x12 mm.

Die Proben wurden abgedeckt in einem Glasgefäß getrennt voneinander in einem Trockenofen für 5 Tage bei 105 °C gehalten.

Nach fünf Tagen hatte sich der Schaum, der in Kontakt mit dem Vergleichsbeispiel V4 war, stark schwarzbraun verfärbt und war an der Kontaktfläche zur Dichtmittelzusammensetzung V3 sehr stark brüchig und teilweise aufgelöst, wobei der Schaum im erfindungsgemäßen Beispiel E3 sich nur im Kontaktbereich etwas schwarzbraun verfärbt hatte und hinsichtlich der Brüchigkeit unversehrt war.

### Bezugszeichenliste

- 1: Laufstreifen
- 2: Seitenwand
- 3: Wulstbereich
- 4: Wulstkern
- 5: Gürtelverband
- 6: Karkasseinlage
- 7: Innenschicht
- 8: Dichtmittellage
- 9: Geräuschabsorber

## Patentansprüche

1. Fahrzeugluftreifen mit einem in seinem Inneren an der dem Laufstreifen (1) gegenüberliegenden Innenfläche haftend angebrachten Geräuschabsorber (9), wobei der Geräuschabsorber (9) an einem vorab aufgebrachten, selbsttätig abdichtenden Dichtmittel (8) haftet, welches zumindest unmittelbar nach seinem Aufbringen eine zum Anhaften des Geräuschabsorbers (9) erforderliche Klebrigkeit aufweist, **dadurch gekennzeichnet, dass** das Dichtmittel (8) wenigstens ein Polyolefin mit einem Chlorgehalt von kleiner oder gleich 5 mg/kg enthält.

2. Fahrzeugluftreifen nach Anspruch 1, **dadurch gekennzeichnet, dass** der Geräuschabsorber (9) ein poröses Dämpfungselement ist.

3. Fahrzeugluftreifen nach Anspruch 2, **dadurch gekennzeichnet, dass** das poröse Dämpfungselement ein in Umlaufrichtung geschlossener oder geöffneter schallabsorbierender Schaumstoffring ist.

4. Fahrzeugluftreifen nach einem der vorherigen Ansprüche, **dadurch gekennzeichnet, dass** der Geräuschabsorber wenigstens ein Polyurethan enthält.

5. Fahrzeugluftreifen nach einem der vorherigen Ansprüche, **dadurch gekennzeichnet, dass** das wenigstens eine Polyolefin des Reifendichtmittels ein Zahlenmittel der Molekulargewichtsverteilung Mn gemäß GPC von 800 bis 2500 g/mol aufweist.

6. Fahrzeugluftreifen nach einem der vorherigen Ansprüche, **dadurch gekennzeichnet, dass** das wenigstens eine Polyolefin wenigstens ein Polybuten ist.

7. Fahrzeugluftreifen nach Anspruch 6, **dadurch gekennzeichnet, dass** das Dichtmittel 65 bis 75 Gew.-% wenigstes eines Polybutens mit einem Chlorgehalt von kleiner oder gleich 5 mg/kg enthält.

8. Fahrzeugluftreifen nach einem der vorherigen Ansprüche, **dadurch gekennzeichnet, dass** das Dichtmittel zudem
- Wenigstens einen Kautschuk und
- Wenigstens einen Füllstoff und
- Wenigstens einen Klebrigmacher und
- Wenigstens einen Vernetzer und
- Wenigstens einen Vernetzungsinitiator
enthält.

9. Verwendung eines Polybutens mit einem Chlorgehalt von kleiner oder gleich 5 mg/kg in einem Haftmittel zur Befestigung eines Geräuschabsorbers aus Polyurethan oder anderen Schaumstoffmaterialien auf der dem Laufstreifen gegenüberliegenden Innenfläche eines Fahrzeugluftreifens.

## Claims

1. Pneumatic vehicle tyre having a sound absorber (9) bonded to the opposite inner surface from the tread (1) in its interior, where the sound absorber (9) is bonded to a self-adhesive sealant (8) which has been applied beforehand and at least immediately after application thereof has tackiness required for adhesion of the sound absorber (9), **characterized in that** the sealant (8) contains at least one polyolefin having a chlorine content of not more than 5 mg/kg.

2. Pneumatic vehicle tyre according to Claim 1, **characterized in that** the sound absorber (9) is a porous damping element.

3. Pneumatic vehicle tyre according to Claim 2, **characterized in that** the porous damping element is a sound-absorbing foam ring which is closed or open in running direction.

4. Pneumatic vehicle tyre according to any of the preceding claims, **characterized in that** the sound absorber comprises at least one polyurethane.

5. Pneumatic vehicle tyre according to any of the preceding claims, **characterized in that** the at least one polyolefin in the tyre sealant has a number-average in the molecular weight distribution Mn by GPC of 800 to 2500 g/mol.

6. Pneumatic vehicle tyre according to any of the preceding claims, **characterized in that** the at least one polyolefin is at least one polybutene.

7. Pneumatic vehicle tyre according to Claim 6, **characterized in that** the sealant contains 65% to 75% by weight of at least one polybutene having a chlorine content of not more than 5 mg/kg.

8. Pneumatic vehicle tyre according to any of the preceding claims, **characterized in that** the sealant additionally contains
- at least one rubber and
- at least one filler and
- at least one tackifier and
- at least one crosslinker and
- at least one crosslinking initiator.

9. Use of a polybutene having a chlorine content of not more than 5 mg/kg in a bonding agent for securing a sound absorber made of polyurethane or other foam materials on the opposite inner surface of a pneumatic vehicle tyre to the tread.

## Revendications

1. Pneu de véhicule comprenant un absorbeur acoustique (9) disposé par adhésion dans son espace intérieur sur la surface intérieure opposée à la bande de roulement (1), l'absorbeur acoustique (9) adhérant à un agent d'étanchéité (8) auto-étanchéifiant appliqué auparavant, qui présente au moins immédiatement après son application une adhésivité nécessaire pour l'adhésion de l'absorbeur acoustique (9), **caractérisé en ce que** l'agent d'étanchéité (8) contient au moins une polyoléfine ayant une teneur en chlore inférieure ou égale à 5 mg/kg.

2. Pneu de véhicule selon la revendication 1, **caractérisé en ce que** l'absorbeur acoustique (9) est un élément amortisseur poreux.

3. Pneu de véhicule selon la revendication 2, **caractérisé en ce que** l'élément amortisseur poreux est un anneau de mousse absorbeur acoustique fermé ou ouvert dans la direction circonférentielle.

4. Pneu de véhicule selon l'une quelconque des revendications précédentes, **caractérisé en ce que** l'absorbeur acoustique contient au moins un polyuréthane.

5. Pneu de véhicule selon l'une quelconque des revendications précédentes, **caractérisé en ce que** ladite au moins une polyoléfine de l'agent d'étanchéité de pneu présente une moyenne en nombre de la distribution du poids moléculaire Mn par CPG de 800 à 2 500 g/mol.

6. Pneu de véhicule selon l'une quelconque des revendications précédentes, **caractérisé en ce que** ladite au moins une polyoléfine est au moins un polybutène.

7. Pneu de véhicule selon la revendication 6, **caractérisé en ce que** l'agent d'étanchéité contient 65 à 75 % en poids d'au moins un polybutène ayant une teneur en chlore inférieure ou égale à 5 mg/kg.

8. Pneu de véhicule selon l'une quelconque des revendications précédentes, **caractérisé en ce que** l'agent d'étanchéité contient en outre :
- au moins un caoutchouc et
- au moins une charge et
- au moins un agent collant et
- au moins un agent de réticulation et
- au moins un initiateur de réticulation.

9. Utilisation d'un polybutène ayant une teneur en chlore inférieure ou égale à 5 mg/kg dans un agent adhésif pour la fixation d'un absorbeur acoustique en polyuréthane ou d'autres matériaux de mousse sur la surface intérieure opposée à la bande de roulement d'un pneu de véhicule.
